(19) Europäisches Patentamt
European Patent Office
Office européen des brevets

(11) **EP 2 667 217 B1**

(12) **EUROPEAN PATENT SPECIFICATION**

(45) Date of publication and mention
of the grant of the patent:
**08.02.2017 Bulletin 2017/06**

(51) Int Cl.:
*G01S 7/40* *(2006.01)*     *G01S 13/00* *(2006.01)*
*G01S 13/89* *(2006.01)*    *H01Q 3/26* *(2006.01)*
*H04B 17/00* *(2015.01)*

(21) Application number: **12174358.7**

(22) Date of filing: **29.06.2012**

(54) **A method and a system with an automatic calibration of a multistatic antenna array**

Verfahren und System mit automatischer Kalibrierung einer multistatischen Antennenanordnung

Procédé et système avec étalonnage automatique d'un réseau d'antennes multistatiques

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.05.2012 EP 12168887**

(43) Date of publication of application:
**27.11.2013 Bulletin 2013/48**

(73) Proprietor: **Rohde & Schwarz GmbH & Co. KG
81671 München (DE)**

(72) Inventor: **Ahmed, Sherif
81737 München (DE)**

(74) Representative: **Körfer, Thomas
Mitscherlich PartmbB
Patent- und Rechtsanwälte
Sonnenstrasse 33
80331 München (DE)**

(56) References cited:
**WO-A1-01/58048     WO-A2-2007/056672
GB-A- 2 318 010     US-A- 5 557 283**

- **SHERIF SAYED AHMED ET AL: "A Novel Fully
Electronic Active Real-Time Imager Based on a
Planar Multistatic Sparse Array", IEEE
TRANSACTIONS ON MICROWAVE THEORY AND
TECHNIQUES, IEEE SERVICE CENTER,
PISCATAWAY, NJ, US, vol. 59, no. 12, 1 December
2011 (2011-12-01), pages 3567-3576,
XP011389183, ISSN: 0018-9480, DOI:
10.1109/TMTT.2011.2172812**

EP 2 667 217 B1

**Description**

The application is related to a method and a system with a refined calibration of an antenna array comprising $N_t$ transmitters and $N_r$ receivers.

Antenna arrays are used e.g. in active multistatic array imaging systems using millimeter wave or microwave signals. They receive enhanced interest due to the utilisation in security, medical and industrial applications. Such antenna arrays comprise a number of transmitting antennas and receiving antennas. To record the data for image generation, each transmitter $T_i$ illuminates the scenario one after the other either at a single frequency or stepwise at different frequencies. The signals, reflected by an object under test, are detected by all receivers in phase and magnitude. The object can be scanned by synthetic focusing techniques as e.g. digital-beamforming which allows relating the received signal with each point of reflection on the illuminated object by numerical means.

Arrays using such focusing methods are known from a publication by Sherif S. Ahmed et al., "A Novel Fully Electronic Active Real-Time Imager Based on a Planar Multistatic Sparse Array", IEEE Transactions on Microwave Theory and Techniques, Vol. 59, No. 12, Dec. 2011, Pages 3567-3576. They require a well-defined plane of phase reference in order for the focusing process to operate correctly. To achieve this, a calibration of each combination of each transmitter with each receiver is done. This calibration is similar to the calibration of a network-analyzer, wherein the option to directly connect the single transmitter and receiver ports is not applicable, especially in an array of several hundreds to a thousand of transmitter and receiver elements. To adjust the phases of the RF channels and to equalize the magnitude of the signals over the frequency band of operation, at least two calibration measurements are required, namely an off-set short measurement and a match measurement. The match measurement $M_m$ is simply the measurement performed against an absorber or an empty scan volume in order to correct for the cross-coupling between transmitter and receiver antennas. The second calibration measurement $M_s$ is performed using a calibration object with a high reflective surface to possibly detect high reflected signals, and hence use the result to calculate the calibration matrix of the multistatic array.

GB 2 318 010 A disclosed a reflection transponder for calibrating phase-array radar. A reflector provides delayed reflection of incident microwave radiation, for example in a phased-array radar system. The radar system comprises an array of antenna elements with associated transmitters and receivers. The reflector is operative to re-radiate to the antenna elements a relatively delayed equivalent of radiation received at the reflector therefrom. A control unit calibrates the radar system from the relative phase and gain characteristics of the antenna elements and their associated transmitters and receivers determined from the radiation transmitted and received at the antenna elements after re-radiation from the reflector. The reflector is enabled/disabled by an optical control signal conveyed to it along an optical fibre. The fibre avoids spurious microwave reflections from a region near the reflector which arise if a conductor is employed to convey the control signal. The reflector incorporates an acoustic-wave delay line to delay microwave radiation prior to re-radiation. Both the radar and the reflector may be mounted in the nose of an aircraft.

WO 2007/056672 A2 shows a calibration for a transmit chain of a device transmitting information to multiple devices over wireless links, which includes selecting from between two or more calibration determination techniques. In certain aspects the techniques include phase only calibration and phase and amplitude calibration.

Due to the lack of direct connection between each transmitter and receiver combination of a multistatic array, the received signals are weak and the resolving calibration matrix is very noisy due to thermal noise.

Therefore, it is the object of the present application to provide reliable calibration data with reduced noise effect in an efficient, fast, and cost optimized way.
The object is solved by a method according to claim 1 and a system according to claim 6 as well as a digital storage medium and computer program according to claims 11 and 12. The dependent claims contain further developments of the invention.

According to the present invention a method for automatically calibrating an antenna array according to claim 1 is provided.

The method relies on correlating the redundant information already available by the multistatic calibration measurement in order to refine the content of the calibration matrix by itself and without the need for any excess measurements to perform. The calibration matrix includes $N_t \cdot N_r$ coefficients, whereas the total number of physical independent unknowns of the antenna array is equal to $N_t + N_r$. The matrix T therefore includes a lot of redundant information, especially for large arrays. This redundancy is thus used to refine an estimate of the calibration matrix T. In an antenna array with 700 transmitters and receivers respectively, a reduction in noise of more than 25dB is expected. This is achieved in a numerical way without any repetition of calibration measurements or usage of high sensitive receivers.

It is especially of advantage, when the $m^{th}$ estimation for the refined calibration matrix $\hat{T}^m$ is calculated using direct algebraic matrix operations from a proceeding estimation $\hat{T}^{m-1}$ by a double matrix multiplication of $\hat{T}^{m-1}$ and an element-wise inverted and transposed matrix of matrix $\hat{T}^{m-1}$ divided by a normalization factor equal to the total number of transmitters $N_t$ multiplied by the total number of receivers $N_r$. Matrix operations can be fast and easily performed numerically by modern digital processing units and does not require complex and expensive processing facilities.

Furthermore, it is of advantage, when matrix elements $T_{ij}$ of invalid calibration measurements are set equal to zero and a corresponding element in the element-wise inverted and transposed matrix of matrix $\hat{T}^{m-1}$ is set equal to zero before performing any matrix multiplication. This measure prevents any instability of the numerical algorithm or singularities in the corresponding matrix.

Furthermore, it is of advantage to use a normalization matrix instead of a normalization factor and the normalization matrix is calculated by double matrix multiplication of $N^{m-1}$ and an element-wise inverted and transposed matrix of matrix $N^{m-1}$ with $N^{m-1}$ corresponding to matrix $\hat{T}^{m-1}$ with all valid elements, i.e. all elements unequal to zero, set to unity. Such a normalization matrix which takes into account those invalid combinations of transmitter $T_i$ with receiver $R_j$ contributing to the calibration data. Therefore, the accuracy of the estimates after the correlation process will become enhanced.

It is of big advantage that it mostly suffices to determine only the first estimation for the refined calibration matrix. The proposed method is made mainly to reduce the additive white Gaussian noise (AWGN) available in the noisy calibration matrix. As a result, the estimated matrix will include considerably reduced AWGN, and would cause a little of biased noise, i.e. with non-zero mean. This biasing effect reduces the efficiency of the further iterations, thus the first estimate has the greatest relevance.

The object is also solved by a system with automatic calibration including an antenna array comprising a number of $N_t$ transmitters and a number of $N_r$ receivers and a processing device providing the means to perform the claimed method.

The system allows an automatic and refined calibration of the antenna array with a processing unit, which requires only few and standard calculation steps for numerical calculation exploiting the redundant information provided in the calibration measurement. A calibration measurement has to be performed only once per used frequency and is therefore very time efficient.

A mathematical development of the applied numerical steps and an embodiment of the invention is described hereafter and illustrated in the accompanying drawings, in which:

Fig. 1    shows an embodiment of the inventive system performing an automatic calibration measurement,

Fig. 2    illustrates the transfer function of an example transmitter-receiver combination,

Fig. 3    show a simulation result of a refined calibration matrix using a signal to noise ratio of approximately 20 dB in the initial matrix,

Fig. 4    illustrates the magnitude of the noise content before and after the calibration matrix refinement, and

Fig. 5    depicts an embodiment of the inventive method by a flow chart.

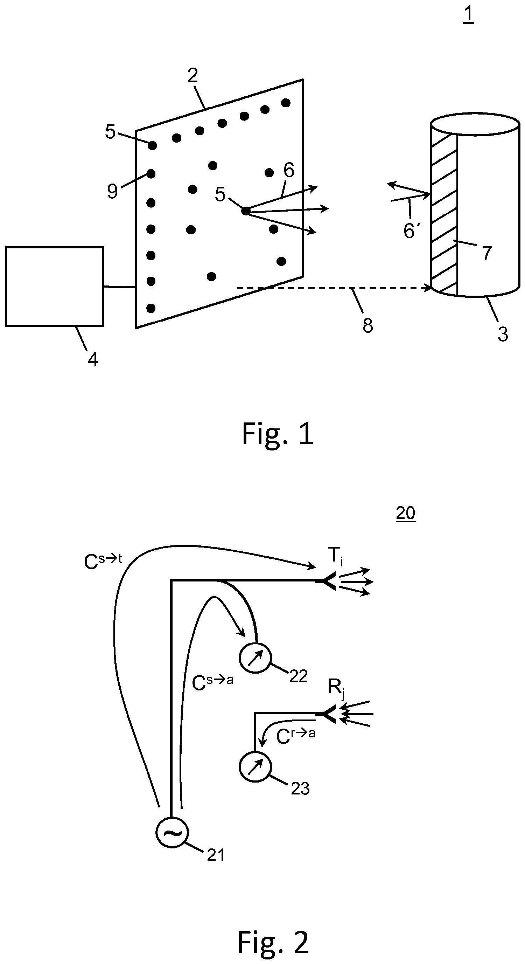

Fig. 1 shows an antenna array (2), which is used e.g. in an imaging system to reconstruct an object. In the following description such an antenna array (2) is defined to include a number $N_t$ of transmitting antennas and a number $N_r$ of receiving antennas as well as the respective transmitters (5) and receivers (9), signal processing means and control means to evaluate the magnitude and phase of the received signal and some data processing means.

To record data for image generation, the transmitter (5) illuminates an object under test e.g. by millimeter waves and all receivers (9) detect the reflected signals (6') by magnitude and phase. For each combination of each transmitter (5) with each receiver (9), the reference phase plane and any cross-couplings have to be determined to obtain precise data. To adjust the phases of the radio frequency channels and to equalize the magnitude of the signals over the frequency band of operation, a calibration measurement $M_s$ is performed wherein each transceiver $T_i$ emits a signal, which is reflected by a calibration object and received by all receivers $R_j$ of the array. The calibration object has at least a partly high reflective surface and is known in shape and in position. The measurement is repeated for each transmitter $T_i$. Additional measurement $M_m$ can be performed for empty scan volume or by using absorber material, in which a signal is transmitted and the received signal is detected. This is used to correct the cross-coupling between the $T_i$ and $R_j$ antennas.

Fig. 1 shows a system configuration 1 to perform calibration measurement $M_s$. A configuration for calibration measurement $M_m$ is similar and therefore not depicted. An antenna array 2 comprising a number of $N_t$ transmitters 5 and $N_r$ receivers 9 form an array aperture. During calibration measurement $M_s$ each transmitter 5 one after another emits a signal 6, e.g. a millimeter-wave signal, towards a calibration object 3 and the reflected signal 6' is detected by each of the receivers 9 of the antenna array 2 and the measured data is transferred to a connected processing device 4. The calibration object 3 has an at least partially reflective surface 7. The calibration object 3 is located at a known position 8 and orientation towards the antenna array 2. Also the shape of the reflective surface 7 of the calibration object 3 is known. Based on information of the calibration object 3, an expected received signal is simulated. The matrix element

$T_{ij}$ of calibration matrix T is generated by the ratio of the measured calibration data to the expected received signal of the transmitter-receiver $T_i$-$R_j$ combination.

Each matrix element $T_{ij}$ of the calibration matrix T represents a correction coefficient which is applied to a measured data of the receiver $R_j$ related to the signal transmitted by transmitter $T_i$ of the antenna array during e.g. a object scan of a image processing application.

The matrix T has therefore $N_t \cdot N_r$ elements for each frequency, whereas the antenna array 2 has a total number of $N_t + N_r$ channels and therefore the same number of independent unknowns. In accordance to that, the redundant information is as large as $N_t \cdot N_r - (N_t + N_r)$. This redundancy can be used to enhance the signal to noise ratio (SNR) inside the calibration matrix.

In the following analysis, the ~ symbol indicates the initial noisy data and ^ symbol indicates a statistical estimate.

The initial noisy calibration matrix $\tilde{T}$ is calculated from,

$$\tilde{T} = \frac{\tilde{M}_s - \tilde{M}_m}{\Gamma_{sim}} \qquad (1)$$

The noise afflicted measurements $\tilde{M}_s$ and $\tilde{M}_m$ performed during the calibration include additive white Gaussian noise (AWGN). On the contrary, calibration data $\Gamma_{sim}$ is free from thermal noise as it is produced by simulation. The values of $\Gamma_{sim}$ has almost constant amplitudes and strong varying phases. Because the phase comes from a plane cut in the far-field of a spherical wave over several order of magnitudes of wavelengths, the phase factor is almost equally distributed from $-\pi$ to $+\pi$. Therefore the probability density function (PDF) of the Gaussian noise will only be scaled with $|\Gamma_{sim}|$ without undergoing shape changing. The noise in $\tilde{T}$ is accumulated through linear operation on two independent AWGN signals and therefore the resultant noise is also AWGN. Let the standard deviation of the thermal noise per single measurement be equal to $\sigma_M$, the $\tilde{T}$ including noise $\mathfrak{A}$ is hence described as

$$\tilde{T} = T + \mathfrak{A}\left(0, 2\left(\frac{\sigma_M}{|\Gamma_{sim}|}\right)^2\right) \qquad (2)$$

The calibration matrix T, which represents the transfer function T of each $T_i$-$R_j$ combination, can be decomposed in two characteristic transfer functions, namely $C^t$ for transmitters and $C^r$ for receivers. The signals flow is indicated in Fig. 2, and the result can be expressed as

$$T = \frac{b}{a}\Big|_{DUT=1} = \frac{C^{s \to t} \cdot 1 \cdot C^{r \to b}}{C^{s \to a}} = \underbrace{\frac{C^{s \to t}}{C^{s \to a}}}_{C^t} \cdot \underbrace{C^{r \to b}}_{C^r} \cdot \qquad (3)$$

On one hand, each transmitter $T_i$ number n has a characteristic transfer function $C_n^t$ describing the output signal at the corresponding $T_i$ antenna relative to the source and normalized to a corresponding reference channel. On the other hand, each receiver $R_j$ number m has a characteristic transfer function $C_m^r$ describing the measured signal at the receiver relative to the input signal from the corresponding $R_j$ antenna. The matrix T is hence described as

$$T\big|_{N_t \times N_r} = C^t\big|_{N_t \times 1} \cdot C^r\big|_{1 \times N_r}$$

$$= \begin{bmatrix} C_1^t C_1^r & C_1^t C_2^r & \cdots & C_1^t C_{N_r}^r \\ C_2^t C_1^r & C_2^t C_2^r & \cdots & C_2^t C_{N_r}^r \\ C_3^t C_1^r & C_3^t C_2^r & \cdots & C_3^t C_{N_r}^r \\ \vdots & \vdots & \ddots & \\ C_{N_t}^t C_1^r & C_{N_t}^t C_2^r & \cdots & C_{N_t}^t C_{N_r}^r \end{bmatrix}$$

$$(4)$$

where

$$C^t\big|_{N_t \times 1} = \begin{bmatrix} C_1^t \\ C_2^t \\ \vdots \\ C_{N_t}^t \end{bmatrix} \quad \text{and} \quad C^r\big|_{1 \times N_r} = \begin{bmatrix} C_1^r C_2^r \ldots C_{N_r}^r \end{bmatrix}. \qquad (5)$$

During the calibration, direct access to $C_n^t C_m^r$ values is not feasible, and instead they are available with noise, i.e. $\widetilde{C_n^t C_m^r}$ .

In order to get an estimate $\widehat{C_m^r}$ , one can consider

$$\left( \frac{\widehat{C_m^r}}{C_k^r} \right) = \frac{1}{N_t} \sum_{n=1}^{N_t} \frac{\widetilde{C_n^t C_m^r}}{\widetilde{C_n^t C_k^r}} \qquad (6)$$

where $k$ can be arbitrarily chosen from 1 to $N_r$, but the same column $C_k^r$ is used to average all columns $C_m^r$ . Here the estimate is achieved by averaging the available records in the column m of $T$ relative to a reference column $k$. Similarly, an estimate for $\widehat{C_n^t}$ can be found using

$$\left( \frac{\widehat{C_n^t}}{C_k^t} \right) = \frac{1}{N_r} \sum_{m=1}^{N_r} \frac{\widetilde{C_n^t C_m^r}}{\widetilde{C_k^t C_m^r}} \qquad (7)$$

where k is also arbitrarily chosen. In this case, the estimate is found by averaging the row n relative to another row k.
It is preferable to formulate the refinement process in a matrix form. For readability, the operator A is defined as

$$Y = \Lambda(X) \qquad (8)$$

where Y is the element-wise inversion of transposed X. As an example A (T) with T as given in equation (4) is

$$\Lambda(T) = \begin{bmatrix} \left(C_1^t C_1^r\right)^{-1} & \left(C_2^t C_1^r\right)^{-1} & \cdots & \left(C_{N_t}^t C_1^r\right)^{-1} \\ \left(C_1^t C_2^r\right)^{-1} & \left(C_2^t C_1^r\right)^{-1} & \cdots & \left(C_{N_t}^t C_2^r\right)^{-1} \\ \vdots & \vdots & \ddots & \vdots \\ \left(C_1^t C_{N_r}^r\right)^{-1} & \left(C_2^t C_{N_r}^r\right)^{-1} & \cdots & \left(C_{N_t}^t C_{N_r}^r\right)^{-1} \end{bmatrix} \qquad (8\mathrm{a})$$

Let initial estimates $\widehat{C^t}^0$ and $\widehat{C^r}^0$ are available, and better estimates $\widehat{C^t}^1$ and $\widehat{C^r}^1$ are to be found. Following equation (4), the estimates are related by

$$\widehat{T}^0 = \widehat{C^t}^0 \cdot \widehat{C^r}^0 \qquad (9\mathrm{a})$$

$$\widehat{T}^1 = \widehat{C^t}^1 \cdot \widehat{C^r}^1 . \qquad (9\mathrm{b})$$

Using a matrix formulation based on equation (6) and equation (7), the new estimates are given by

$$\widehat{C^t}^1 = \frac{1}{N_r} \cdot \widehat{T}^0 \cdot \Lambda\left(\widehat{C^r}^0\right) \qquad (10\mathrm{a})$$

$$\widehat{C^r}^1 = \frac{1}{N_t} \cdot \Lambda\left(\widehat{C^t}^0\right) \cdot \widehat{T}^0 . \qquad (10\mathrm{b})$$

Applying equations (10a), (10b) in equation (9b) leads to

$$\widehat{T} = \frac{1}{N_t \cdot N_r} \cdot \widehat{T}^0 \cdot \Lambda\left(\widehat{C^r}^0\right) \cdot \Lambda\left(\widehat{C^t}^0\right) \cdot \widehat{T}^0 \qquad (11)$$

and after some algebraic arrangements, the new estimate is related to the initial one by

$$\widehat{T}^1 = \frac{1}{N_t \cdot N_r} \cdot \widehat{T}^0 \cdot \Lambda\left(\widehat{T}^0\right) \cdot \widehat{T}^0 \qquad (12)$$

The new estimate of the calibration matrix is hence directly calculated from the older one by matrix multiplication of matrix $\widehat{T}^0$ with matrix $\Lambda(\widehat{T}^0)$ multiplied by matrix $\widehat{T}^0$ followed by a normalization factor equal to the total number of elements inside the matrix. In this formulation, it is no more necessary to decompose T into the characteristic functions $C^t$ and $C^r$, and is therefore independent of any arbitrary choice of a reference column or row as in equation (6) and equation (7). If the calibration matrix T is described by equation (2) as an initial estimate, then the enhanced estimate $\widehat{T}$ is given by

$$\hat{T} = \frac{1}{N_r \cdot N_t} \cdot \tilde{T} \cdot \Lambda\left(\tilde{T}\right) \cdot \tilde{T} \qquad . \qquad (13)$$

As the noise in the data is assumed to be fully uncorrelated as an AWGN, the limit reduction of its variance is given by $\mathfrak{A}$ assuming an $N_t=N_r=N$, because $N^2$ records are averaged to get 2N ones. Following the definition in equation (13), the noise $\mathfrak{A}$ in the records of the estimate of the calibration matrix after the refinement process is equivalent to

$$\hat{T} = T + \mathfrak{A}\left(\frac{0,4}{N}\left(\frac{\sigma_M}{|\Gamma_{sim}|}\right)^2\right) \qquad . \qquad (14)$$

The formulation in equation (12) offers an iterative solution for the refinement process. However this is generally true, the iterative process would not significantly enhance the estimate after the first iteration. The reason for this lies in the fact that the refinement process assumes a zero mean uncorrelated noise, which is strictly true only for T. The process in equation (12), or similarly in equation (6) and equation (7), performs a normalization operation in order to average the records. This normalization is made to noisy records with AWGN. As a result, the estimated record will not include AWGN, but a biased noise, i.e. with non-zero mean. This biasing effect might reduce the efficiency of further iterations in some cases.

The enhancement of the signal to noise ratio (SNR) described in equation (14) is very valuable for the calibration of large arrays. Antenna arrays (2) for imaging systems often include hundreds to thousands of elements. For an array with 1000 transmitters and 1000 receivers, the SNR could be enhanced with a factor of $10 \cdot \log_{10}(1000/2) \approx 27 dB$. This factor can be used to relax the requirement on the integration time in the receivers, and hence speed up the calibration process and/or allow for the usage of smaller calibration objects with lower radar cross-section values and/or alternatively increase the distance to the calibration object.

In practice, the calibration matrix T could be sparse either due to the existence of defect channels and/or invalid data made by receiver compression at places of strong cross-coupling with transmitters. The numerical implementation of the refinement process must take into account the sparseness of the matrix and also correct the normalization factor where some records are physically not available for the averaging process.

This is achieved by replacing invalid records in T with zeros. Further on the corresponding records in the result of A(T) due to the zeros in T must be replaced with zeros again before being applied to the matrix multiplication step. Instead of using the single value $N_t \cdot N_r$, a normalization matrix N is to be used. The normalization is an element-wise operation. The matrix N can be easily found by considering the case when all valid records are ideally equal to unity. In this case the matrix multiplication used in the refinement process will yield the normalization matrix itself. The inversion made by A must be avoided in this case. This is described mathematically by

$$N = \left(\tilde{T} \neq 0\right) \cdot \left(\tilde{T} \neq 0\right)^T \cdot \left(\tilde{T} \neq 0\right) \qquad (15)$$

where $(\tilde{T} \neq 0)$ indicate the logical operation resulting in ones when a valid record is available in the matrix T and zero otherwise, and $()^T$ indicates matrix transpose operation.

The performance of the calibration matrix refinement algorithm can be investigated by means of numerical simulations. For this, a synthetic column vector $C^t$ and a row vector $C^r$ are generated with little variations in the magnitude and strong variations in the phases, which simulates the real situation in an imaging system at some frequency of selection. However, as these values are deterministic in nature, the task of the algorithm is to come to an estimate as close as possible of their product. The practical simulation can hence be made by using 768 transmitters and 768 receivers.

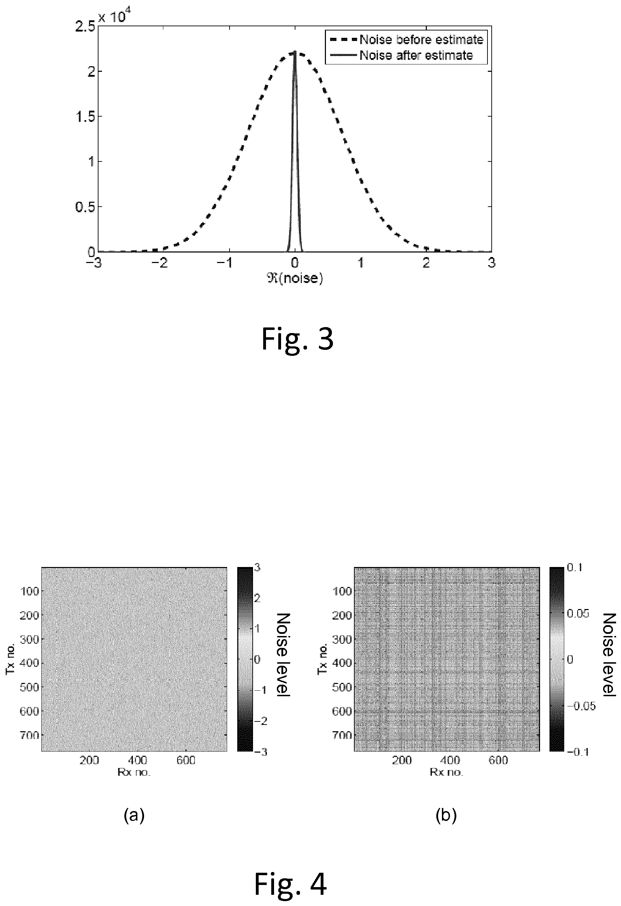

Performing the refinement process as in equation (13), the real part of the noise before and after the refinement process is shown in Fig. 3. The result is similar for the imaginary part of the signal. Fig. 3 shows the strong reduction in the variance of the probability distribution function of the noise, without visible change in the zero-mean Gaussian shape of the distribution. The variance of the rest noise in $\hat{T}$ is reduced to 0.0026, instead of the unity variance in $\tilde{T}$, which is equivalent to a reduction in the noise power by 25.9 dB for this example. This meets the expected theoretical limit reduction of $10 \cdot \log_{10}(768/2) \approx 25.84 dB$. Comparison of the noise distributions within the matrices $\tilde{T}$, i.e. before refinement,

and $\hat{T}$, i.e. after refinement, is shown in Fig. 4. Noise is significantly reduced as can be emphasized by the lower scaling level of the right diagram (b).

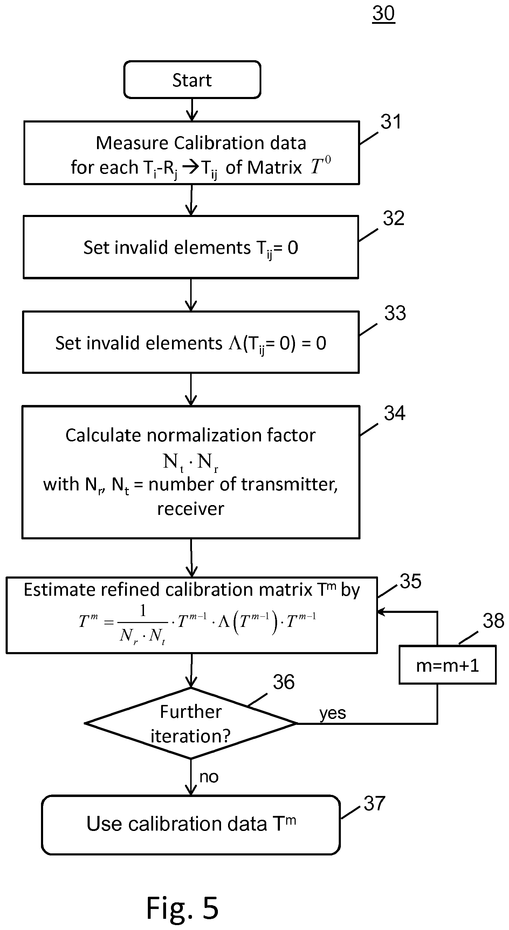

Fig. 5 subsumes the refinement method in a flow chart 30. In step 31 the calibration data $T_{ij}$ of the calibration matrix T is measured for each transceiver-receiver $T_i$-$R_j$ combination. The first estimation is started with $\hat{T}^0$ which is the measured calibration matrix T. In step 32 the spare elements of $T_{ij}$ are set to zero and in step 33 the corresponding elements in the element-wise inversed and transposed matrix of matrix A(T) are set to zero. In step 34 the normalization factor $N_t \cdot N_r$ is calculated. Alternatively the normalization matrix N, calculated as described above, can be used instead of the normalizition factor. Now a first estimate of a refined calibration matrix $\hat{T}^1$ is calculated by matrix multiplication of matrix T with matrix A(T) multiplied by matrix T in step 35. In step 36 it has to be decided whether a further iteration has to be performed. If a further estimation $\hat{T}^{m+1}$ is desired, m is set to m+1, see step 38. Step 35 has to be performed using the present estimation $\hat{T}^m$ as input for matrix T. In most of the cases no further iteration, i.e. no further estimate, is required and the calibration matrix $\hat{T}^1$ is applied in the imaging system, see step 37.

The invitation is not limited to the described embodiment. The invention also comprises all combinations of any of the described, claimed or depicted features.

## Claims

1. Method for an automatic calibration of a multistatic antenna array (2) comprising $N_t$ transmitters (5) and $N_r$ receivers (9), wherein a correction coefficient is determined for each combination of each transmitter $T_i$ (5) with each receiver $R_j$ (9) at each operation frequency by a calibration measurement (31) represented by a matrix element $T_{ij}$ of a calibration matrix T,
   wherein an m$^{th}$ estimation (35) for a refined calibration matrix $\hat{T}^m$ is determined by the step

    i. measuring (31) initial matrix elements $T_{ij}$, wherein $T_{ij}$ is the ratio of the measured magnitude and phase of a signal at receiver $R_j$, which is emitted by transmitter $T_i$ and reflected by a known calibration object (3), to an expected received signal at receiver $R_j$ (5),

   wherein the m$^{th}$ estimation for the refined calibration matrix $\hat{T}^m$ (35) is calculated from a preceding estimation $\hat{T}^{m-1}$ by the operation

$$\hat{T}^m = \frac{1}{N_t \cdot N_r} \cdot \hat{T}^{m-1} \cdot \Lambda\left(\hat{T}^{m-1}\right) \cdot \hat{T}^{m-1}$$

   of matrix $\hat{T}^{m-1}$ and an element-wise inverted and transposed matrix of matrix $\hat{T}^{m-1}$ divided by a normalization factor, which equals to the total number of transmitters $N_t$ multiplied by the total number of receivers $N_r$, wherein $\Lambda$ is an elementwise inversion of transposed matrix $\hat{T}^{m-1}$, wherein the first estimation is started with $\hat{T}^0$ which comprises the initial calibration matrix elements $T_{ij}$ measured in step i.

2. Method according to claim 1,
   **characterized in that**
   the initial matrix elements $T_{ij}$ of invalid calibration measurements are set equal to zero (32) and the corresponding element in the element-wise inverted and transposed matrix of matrix $\hat{T}^{m-1}$ is set equal to zero (33) before performing the matrix multiplication.

3. Method according to claim 2,
   **characterized in that**
   a normalization matrix N is calculated (34) by double matrix multiplication of $\hat{N}^{m-1}$ and an element-wise inverted and transposed matrix of matrix $\hat{N}^{m-1}$, wherein matrix $\hat{N}^{m-1}$ corresponds to matrix $\hat{T}^{m-1}$, wherein all elements, which are unequal to zero, are set to unity and wherein the normalization matrix is used as normalization factor.

4. Method according to any of claims 1 to 3,
   **characterized in that**
   the expected received signal used in measured initial matrix elements $T_{ij}$ is determined by simulating the signal, which was emitted by transmitter $T_i$ (5), then reflected at the known calibration object (3) and received in receiver $R_j$ (9).

5. Method according to any of claims 1 to 4,

**characterized in that**
the calibration measurement is performed **in that** each transmitter $T_i$ (5) emits a signal (6), which is reflected by a calibration object (3) with an at least partly high reflective surface and of known shape, positioned in a known distance (8), and which is received by the respective receiver $R_j$ (9), and/or **in that** each transmitter $T_i$ (5) emits towards an absorber positioned in front of the antenna array (2) and a received signal is detected by the respective receiver $R_j$ (9).

6. System for automatic calibration including an antenna array (2) comprising $N_t$ transmitters (5) and $N_r$ receivers (9) and a processing device (4), wherein
   the antenna array (2) performs a calibration measurement for each combination of each transmitter $T_i$ (5) with each receiver $R_j$ (9) of the antenna array (2) at each operation frequency and the processing device (4) has means to determine a correction coefficient for each combination of each transmitter $T_i$ (5) with each receiver $R_j$ (9) from the corresponding calibration measurement represented by a matrix element $T_{ij}$ of a calibration matrix T,
   wherein

   i. the antenna array (2) measures initial matrix elements $T_{ij}$, wherein $T_{ij}$ is the ratio of a signal measured in magnitude and phase at the receiver $R_j$ (5), which was emitted by transmitter $T_i$ (9) and reflected by a known calibration object (3), to an expected received signal at receiver $R_j$ (5), and

   wherein the processing device (4) has means to calculate a $m^{th}$ estimation for the refined calibration matrix $\hat{T}^m$ from an preceding estimation $\hat{T}^{m-1}$ by the operation

   $$\hat{T}^m = \frac{1}{N_t \cdot N_r} \cdot \hat{T}^{m-1} \cdot \Lambda\left(\hat{T}^{m-1}\right) \cdot \hat{T}^{m-1}$$

   of matrix $\hat{T}^{m-1}$ and an element-wise inverted and transposed matrix of matrix $\hat{T}^{m-1}$ divided by a normalization factor equal to the total number of transmitters $N_t$ multiplied by the total number of receivers $N_r$, wherein A is an elementwise inversion of transposed matrix $\hat{T}^{m-1}$,
   wherein the first estimation is started with $\hat{T}^0$ which comprises the initial calibration matrix elements $T_{ij}$ measured in step i.

7. System according to claim 6,
   **characterized in that**
   the processing device (4) has means to set the initial matrix elements $T_{ij}$ of invalid measurements equal to zero and set the corresponding element in the element-wise inverted and transposed matrix of matrix $\hat{T}^{m-1}$ equal to zero before performing the matrix multiplication.

8. System according to claim 7,
   **characterized in that**
   the processing device (4) has means to calculate a normalization matrix N by double matrix multiplication of T' and an element-wise inverted and transposed matrix of matrix T', wherein matrix T' corresponds to measured calibration matrix T but with all element unequal to zero are set to unity, and to apply the normalization matrix as normalization factor.

9. System according to any of claims 6 to 8,
   **characterized in that**
   the processing device (4) has means to calculate the expected received signal used in the measured initial calibration matrix elements $T_{ij}$ by simulating the reflected signal, which was emitted by transmitter $T_i$ (5), then reflected at the known calibration object (3) and received in receiver $R_j$ (9).

10. System according to any of claims 6 to 9,
    **characterized in that**
    the antenna array (2) has means to perform the calibration measurement **in that** each transmitter $T_i$ (5) emits a signal (6), which is reflected by the calibration object (3), which has an at least partly high reflective surface (7), is of known shape and is positioned in a known distance (8), and which is received by each receiver (9) and/or **in that** each transmitter $T_i$ (5) emits a signal (6) towards an absorber positioned in front of the antenna array (2) and a received signal is detected by each receiver $R_j$ (9).

**11.** Digital storage medium with control signals electronically readable from the digital storage medium, which interact with a programmable computer or digital signal processor in a manner that all steps of the method according to any of claims 1 to 5 can be performed.

**12.** Computer program with program-code-means to perform all steps of any of claims 1 to 5, when the program is performed on a programmable computer or a digital signal processor.

**Patentansprüche**

**1.** Verfahren zum automatischen Kalibrieren einer multistatischen Antennenanordnung (2), umfassend $N_t$ Sender (5) und $N_r$ Empfänger (9),
wobei für jede Kombination aus jedem Sender $T_i$ (5) mit jedem Empfänger $R_j$ (9) bei jeder Betriebsfrequenz durch eine Kalibrierungsmessung (31) ein Korrekturkoeffizient bestimmt wird, der durch ein Matrixelement $T_{ij}$ einer Kalibrierungsmatrix T dargestellt ist,
wobei eine m-te Schätzung (35) für eine verfeinerte Kalibrierungsmatrix $\hat{T}^m$ durch den Schritt

i. Messen (31) von Ausgangs-Matrixelementen $T_{ij}$ bestimmt wird, wobei $T_{ij}$ das Verhältnis der gemessenen Größe und Phase eines von einem Sender $T_i$ abgestrahlten und von einem bekannten Kalibrierungsobjekt (3) reflektierten Signals am Empfänger $R_j$ zu einem erwarteten empfangenen Signal an dem Empfänger $R_j$ (5) ist,

wobei die m-te Schätzung für die verfeinerte Kalibrierungsmatrix $\hat{T}^m$ (35) aus einer vorhergehenden Schätzung $\hat{T}^{m-1}$ durch die Operation

$$\hat{T}^m = \frac{1}{N_t \cdot N_r} \cdot \hat{T}^{m-1} \cdot \Lambda\left(\hat{T}^{m-1}\right) \cdot \hat{T}^{m-1}$$

der Matrix $\hat{T}^{m-1}$ und einer elementweise invertierten und transponierten Matrix der Matrix $\hat{T}^{m-1}$ dividiert durch einen Normierungsfaktor berechnet wird, der gleich der Gesamtzahl der Sender $N_t$ multipliziert mit der Gesamtzahl der Empfänger $N_r$ ist, wobei $\Lambda$ eine elementweise Inversion der transponierten Matrix $\hat{T}^{m-1}$ ist
und wobei die erste Schätzung mit $\hat{T}^0$ begonnen wird, welche die beim Schritt i gemessenen Ausgangs-Matrixelemente $T_{ij}$ umfasst.

**2.** Verfahren nach Anspruch 1,
**dadurch gekennzeichnet, dass** vor Ausführen der Matrix-Multiplikation die Ausgangs-Matrixelemente $T_{ij}$ von ungültigen Kalibrierungsmessungen gleich Null (32) und das entsprechende Element in der elementweise invertierten und transponierten Matrix der Matrix $\hat{T}^{m-1}$ gleich Null (33) gesetzt werden.

**3.** Verfahren nach Anspruch 2,
**dadurch gekennzeichnet, dass** eine Normierungsmatrix N durch doppelte Matrix-Multiplikation von $\hat{N}^{m-1}$ und einer elementweise invertierten und transponierten Matrix der Matrix $\hat{N}^{m-1}$ berechnet (34) wird, wobei die Matrix $\hat{N}^{m-1}$ der Matrix $T^{m-1}$ entspricht, wobei sämtliche Elemente, die ungleich Null sind, auf Eins gesetzt werden und wobei die Normierungsmatrix als Normierungsfaktor verwendet wird.

**4.** Verfahren nach einem der Ansprüche 1 bis 3,
**dadurch gekennzeichnet, dass** das in gemessenen Ausgangs-Matrixelementen $T_{ij}$ verwendete erwartete empfangene Signal durch Simulieren des Signals bestimmt wird, welches von dem Sender $T_i$ (5) abgestrahlt, sodann an dem bekannten Kalibrierungsobjekt (3) reflektiert und in dem Empfänger $R_j$ (9) empfangen wurde.

**5.** Verfahren nach einem der Ansprüche 1 bis 4,
**dadurch gekennzeichnet, dass** die Kalibrierungsmessung dadurch ausgeführt wird, dass jeder Sender $T_i$ (5) ein Signal (6) abstrahlt, welches durch ein in einem bekannten Abstand (8) positioniertes Kalibrierungsobjekt (3) mit einer zumindest zum Teil stark reflektierenden Oberfläche und von bekannter Form reflektiert wird und welches durch den jeweiligen Empfänger $R_j$ (9) empfangen wird,
und/oder dass jeder Sender $T_i$ (5) ein Signal zu einem vor der Antennenanordnung (2) positionierten Absorber abstrahlt und ein empfangenes Signal durch den jeweiligen Empfänger $R_j$ (9) detektiert wird.

6. System zum automatischen Kalibrieren, enthaltend eine $N_t$ Sender (5) und $N_r$ Empfänger (9) umfassende Antennenanordnung (2) und eine Verarbeitungsvorrichtung (4), wobei die Antennenanordnung (2) eine Kalibrierungsmessung für jede Kombination aus jedem Sender $T_i$ (5) mit jedem Empfänger $R_j$ (9) der Antennenanordnung (2) bei jeder Betriebsfrequenz ausführt und die Verarbeitungsvorrichtung (4) Mittel aufweist, um einen Korrekturkoeffizienten für jede Kombination aus jedem Sender $T_i$ (5) mit jedem Empfänger $R_j$ (9) aus der durch ein Matrixelement $T_{ij}$ einer Kalibrierungsmatrix T dargestellten entsprechenden Kalibrierungsmessung zu bestimmen, wobei

 i. die Antennenanordnung (2) Ausgangs-Matrixelemente $T_{ij}$ misst, wobei $T_{ij}$ das Verhältnis von einem an dem Empfänger $R_j$ (5) in der Größe und Phase gemessenen Signal, welches von einem Sender $T_i$ (9) abgestrahlt und von einem bekannten Kalibrierungsobjekt (3) reflektiert wurde, zu einem am Empfänger $R_j$ (5) erwarteten empfangenen Signal ist,

wobei die Verarbeitungsvorrichtung (4) Mittel aufweist, um eine m-te Schätzung für die verfeinerte Kalibrierungsmatrix $\hat{T}^m$ aus einer vorhergehenden Schätzung $\hat{T}^{m-1}$ durch die Operation

$$\hat{T}^m = \frac{1}{N_t \cdot N_r} \cdot \hat{T}^{m-1} \cdot \Lambda\left(\hat{T}^{m-1}\right) \cdot \hat{T}^{m-1}$$

der Matrix $\hat{T}^{m-1}$ und einer elementweise invertierten und transponierten Matrix der Matrix $\hat{T}^{m-1}$ dividiert durch einen Normierungsfaktor zu berechnen, der gleich der Gesamtzahl der Sender $N_t$ multipliziert mit der Gesamtzahl der Empfänger $N_r$ ist, wobei $\Lambda$ eine elementweise Inversion der transponierten Matrix $\hat{T}^{m-1}$ ist und wobei die erste Schätzung mit $\hat{T}^0$ begonnen wird, welche die beim Schritt i gemessenen Ausgangs-Kalibrierungs-Matrixelemente $T_{ij}$ umfasst.

7. System nach Anspruch 6, **dadurch gekennzeichnet, dass** die Verarbeitungsvorrichtung (4) Mittel aufweist, um die Ausgangs-Matrixelemente $T_{ij}$ von ungültigen Messungen gleich Null und das entsprechende Element in der elementweise invertierten und transponierten Matrix der Matrix $\hat{T}^{m-1}$ gleich Null zu setzen, bevor die Matrixmultiplikation ausgeführt wird.

8. System nach Anspruch 7, **dadurch gekennzeichnet, dass** die Verarbeitungsvorrichtung (4) Mittel aufweist, um eine Normierungsmatrix N durch doppelte Matrix-Multiplikation von T' und einer elementweise invertierten und transponierten Matrix der Matrix T' zu berechnen, wobei die Matrix T' der gemessenen Kalibrierungsmatrix entspricht, wobei T jedoch sämtliche Elemente, die ungleich Null sind, auf Eins gesetzt sind, und um die Normierungsmatrix als Normierungsfaktor zu verwenden.

9. System nach einem der Ansprüche 6 bis 8, **dadurch gekennzeichnet, dass** die Verarbeitungsvorrichtung (4) Mittel aufweist, um das erwartete empfangene Signal, welches in den gemessenen Ausgangs-Matrixelementen $T_{ij}$ verwendet wird, durch Simulieren des reflektierten Signals zu berechnen, welches von dem Sender $T_i$ (5) abgestrahlt, sodann an dem bekannten Kalibrierungsobjekt (3) reflektiert und in dem Empfänger $R_j$ (9) empfangen wurde.

10. System nach einem der Ansprüche 6 bis 9, **dadurch gekennzeichnet, dass** die Antennenanordnung (2) Mittel aufweist, um die Kalibrierungsmessung dadurch auszuführen, dass jeder Sender $T_i$ (5) ein Signal (6) abstrahlt, welches durch das Kalibrierungsobjekt (3) reflektiert wird, das eine zumindest zum Teil stark reflektierende Oberfläche (7) aufweist, von bekannter Form und in einem bekannten Abstand (8) positioniert ist, und welches durch jeden Empfänger (9) empfangen wird, und/oder dass jeder Sender $T_i$ (5) ein Signal (6) zu einem vor der Antennenanordnung (2) positionierten Absorber abstrahlt und ein empfangenes Signal durch den jeweiligen Empfänger $R_j$ (9) detektiert wird.

11. Digitales Speichermedium mit Steuersignalen, die von dem digitalen Speichermedium elektronisch lesbar sind, und das mit einem programmierbaren Computer oder einem digitalen Signalprozessor in einer Weise zusammenwirkt, dass sämtliche Schritte des Verfahrens nach einem der Ansprüche 1 bis 5 ausgeführt werden können.

12. Computerprogramm mit Programmcodemitteln, um sämtliche Schritte nach einem der Ansprüche 1 bis 5 auszuführen, wenn das Programm auf einem programmierbaren Computer oder einem digitalen Signalprozessor ausgeführt wird.

**Revendications**

1.  Procédé pour un étalonnage automatique d'un réseau d'antennes multistatiques (2) comportant $N_t$ émetteurs (5) et $N_r$ récepteurs (9), dans lequel un coefficient de correction est déterminé pour chaque combinaison de chaque émetteur $T_i$ (5) avec chaque récepteur $R_j$ (9) à chaque fréquence de fonctionnement, par une mesure d'étalonnage (31) représentée par un élément de matrice $T_{ij}$ d'une matrice d'étalonnage T ;
    dans lequel une $m^{ième}$ estimation (35) pour une matrice d'étalonnage affinée $\hat{T}^m$ est déterminée par l'étape ci-dessous consistant à :

    i. mesurer (31) des éléments de matrice initiaux $T_{ij}$, dans lequel $T_{ij}$ est le rapport de la phase et de l'amplitude mesurées d'un signal au niveau du récepteur $R_j$, qui est émis par l'émetteur $T_i$ et réfléchi par un objet d'étalonnage connu (3), à un signal reçu attendu au niveau du récepteur $R_j$ (5);

    dans lequel la $m^{ième}$ estimation pour la matrice d'étalonnage affinée $\hat{T}^m$ (35) est calculée à partir d'une estimation antérieure $\hat{T}^{m-1}$ par l'opération ci-dessous

    $$\hat{T}^m = \frac{1}{N_t \cdot N_r} \cdot \hat{T}^{m-1} \cdot \Lambda\left(\hat{T}^{m-1}\right) \cdot \hat{T}^{m-1}$$

    de la matrice $\hat{T}^{m-1}$ et d'une matrice transposée et inversée à l'échelle des éléments de la matrice $\hat{T}^{m-1}$ divisée par un facteur de normalisation, qui est égal au nombre total d'émetteurs $N_t$ multiplié par le nombre total de récepteurs $N_r$, dans lequel $\Lambda$ est une inversion à l'échelle des éléments de la matrice transposée $\hat{T}^{m-1}$, dans lequel la première estimation est initiée avec $\hat{T}^0$, qui comporte les éléments de matrice d'étalonnage initiaux $T_{ij}$ mesurés à l'étape i.

2.  Procédé selon la revendication 1,
    **caractérisé en ce que**
    les éléments de matrice initiaux $T_{ij}$ de mesures d'étalonnage non valides sont définis comme étant nuls (32) et l'élément correspondant dans la matrice transposée et inversée à l'échelle des éléments de la matrice $\hat{T}^{m-1}$ est défini comme étant nul (33) avant de mettre en oeuvre la multiplication matricielle.

3.  Procédé selon la revendication 2,
    **caractérisé en ce que**
    une matrice de normalisation N est calculée (34) par une double multiplication matricielle de $\hat{N}^{m-1}$ et d'une matrice transposée et inversée à l'échelle des éléments de la matrice $\hat{N}^{m-1}$, dans lequel la matrice $\hat{N}^{m-1}$ correspond à la matrice $T^{m-1}$, dans lequel tous les éléments, qui ne sont pas nuls, sont définis sur une valeur unitaire et dans lequel la matrice de normalisation est utilisée en tant que facteur de normalisation.

4.  Procédé selon l'une quelconque des revendications 1 à 3,
    **caractérisé en ce que**
    le signal reçu attendu utilisé dans des éléments de matrice initiaux mesurés $T_{ij}$ est déterminé en simulant le signal, qui a été émis par l'émetteur $T_i$ (5), puis reflété au niveau de l'objet d'étalonnage connu (3) et reçu dans le récepteur $R_j$ (9).

5.  Procédé selon l'une quelconque des revendications 1 à 4,
    **caractérisé en ce que**
    la mesure d'étalonnage est mise en oeuvre **en ce que** chaque émetteur $T_i$ (5) émet un signal (6), qui est reflété par un objet d'étalonnage (3) avec une surface au moins partiellement hautement réfléchissante et de forme connue, positionné à une distance connue (8), et qui est reçu par le récepteur respectif $R_j$ (9), et/ou **en ce que** chaque émetteur $T_i$ (5) émet vers un absorbeur positionné en regard du réseau d'antennes (2) et un signal reçu est détecté par le récepteur respectif $R_j$ (9).

6.  Système d'étalonnage automatique incluant un réseau d'antennes (2) comportant $N_t$ émetteurs (5) et $N_r$ récepteurs (9) et un dispositif de traitement (4), dans lequel le réseau d'antennes (2) met en oeuvre une mesure d'étalonnage pour chaque combinaison de chaque émetteur T$_i$ (5) avec chaque récepteur R$_j$ (9) du réseau d'antennes (2) à chaque fréquence de fonctionnement et le dispositif de traitement (4) présente un moyen pour déterminer un coefficient de correction pour chaque combinaison de chaque émetteur T$_i$ (5) avec chaque récepteur R$_j$ (9) à partir de la mesure d'étalonnage correspondante représentée par un élément de matrice T$_{ij}$ d'une matrice d'étalonnage T ; dans lequel

    i. le réseau d'antennes (2) mesure des éléments de matrice initiaux T$_{ij}$, dans lequel T$_{ij}$ est le rapport d'un signal mesuré en phase et amplitude au niveau du récepteur R$_j$ (5), qui a été émis par l'émetteur T$_i$ (9) et réfléchi par un objet d'étalonnage connu (3), à un signal reçu attendu au niveau du récepteur R$_j$ (5) ; et

dans lequel le dispositif de traitement (4) présente un moyen pour calculer une m$^{ième}$ estimation pour la matrice d'étalonnage affinée $\hat{T}^m$, à partir d'une estimation antérieure $\hat{T}^{m-1}$ par l'opération ci-dessous

$$\hat{T}^m = \frac{1}{N_t \cdot N_r} \cdot \hat{T}^{m-1} \cdot \Lambda\left(\hat{T}^{m-1}\right) \cdot \hat{T}^{m-1}$$

de la matrice $\hat{T}^{m-1}$ et d'une matrice transposée et inversée à l'échelle des éléments de la matrice $\hat{T}^{m-1}$ divisée par un facteur de normalisation égal au nombre total d'émetteurs N$_t$ multiplié par le nombre total de récepteurs N$_r$, dans lequel $\Lambda$ est une inversion à l'échelle des éléments de la matrice transposée $\hat{T}^{m-1}$, dans lequel la première estimation est initiée avec $\hat{T}^0$, qui comporte les éléments de matrice d'étalonnage initiaux T$_{ij}$ mesurés à l'étape i.

7. Système selon la revendication 6,
**caractérisé en ce que**
le dispositif de traitement (4) présente un moyen pour définir les éléments de matrice initiaux T$_{ij}$ de mesures non valides comme étant nuls et pour définir l'élément correspondant dans la matrice transposée et inversée à l'échelle des éléments de la matrice $\hat{T}^{m-1}$ comme étant nul, avant de mettre en oeuvre la multiplication matricielle.

8. Système selon la revendication 7,
**caractérisé en ce que**
le dispositif de traitement (4) présente un moyen pour calculer une matrice de normalisation N par une double multiplication matricielle de T' et d'une matrice transposée et inversée à l'échelle des éléments de la matrice T', dans lequel la matrice T' correspond à une matrice d'étalonnage mesurée T, mais dont tous les éléments non nuls sont définis sur une valeur unitaire, et pour appliquer la matrice de normalisation en tant qu'un facteur de normalisation.

9. Système selon l'une quelconque des revendications 6 à 8,
**caractérisé en ce que**
le dispositif de traitement (4) présente un moyen pour calculer le signal reçu attendu utilisé dans les éléments de matrice d'étalonnage initiaux mesurés T$_{ij}$ en simulant le signal réfléchi, qui a été émis par l'émetteur T$_i$ (5), puis réfléchi au niveau de l'objet d'étalonnage connu (3) et reçu dans le récepteur R$_j$ (9).

10. Système selon l'une quelconque des revendications 6 à 9,
**caractérisé en ce que**
le réseau d'antennes (2) présente un moyen pour mettre en oeuvre la mesure d'étalonnage **en ce que** chaque émetteur T$_i$ (5) émet un signal (6), qui est réfléchi par l'objet d'étalonnage (3), qui présente une surface au moins partiellement hautement réfléchissante (7), est de forme connue et est positionné à une distance connue (8), et qui est reçu par chaque récepteur (9), et/ou **en ce que** chaque émetteur T$_i$ (5) émet un signal (6) vers un absorbeur positionné en regard du réseau d'antennes (2) et un signal reçu est détecté par chaque récepteur R$_j$ (9).

11. Support de stockage numérique présentant des signaux de commande lisibles électroniquement à partir du support de stockage numérique, qui interagissent avec un ordinateur programmable ou un processeur de signal numérique de sorte que toutes les étapes du procédé selon l'une quelconque des revendications 1 à 5 peuvent être mises en oeuvre.

12. Programme informatique présentant un moyen de code de programme pour mettre en oeuvre toutes les étapes selon l'une quelconque des revendications 1 à 5, lorsque le programme est mis en oeuvre sur un ordinateur programmable ou un processeur de signal numérique.

Fig. 1

Fig. 2

Fig. 3

(a)                                                        (b)

Fig. 4

30

```
        ┌─────────────┐
        │    Start    │
        └──────┬──────┘
               │
    ┌──────────▼──────────────────┐  31
    │  Measure Calibration data   │
    │  for each Tᵢ-Rⱼ →Tᵢⱼ of Matrix T⁰ │
    └──────────┬──────────────────┘
               │
    ┌──────────▼──────────────────┐  32
    │  Set invalid elements Tᵢⱼ= 0 │
    └──────────┬──────────────────┘
               │
    ┌──────────▼──────────────────┐  33
    │ Set invalid elements Λ(Tᵢⱼ= 0) = 0 │
    └──────────┬──────────────────┘
               │
    ┌──────────▼──────────────────┐  34
    │   Calculate normalization factor │
    │            Nₜ · Nᵣ           │
    │ with Nᵣ, Nₜ = number of transmitter, │
    │            receiver         │
    └──────────┬──────────────────┘
               │
    ┌──────────▼──────────────────┐  35
    │ Estimate refined calibration matrix Tᵐ by │
    │                             │
    └──────────┬──────────────────┘
```

Measure Calibration data for each $T_i$-$R_j \rightarrow T_{ij}$ of Matrix $T^0$

Set invalid elements $T_{ij} = 0$

Set invalid elements $\Lambda(T_{ij} = 0) = 0$

Calculate normalization factor $N_t \cdot N_r$ with $N_r$, $N_t$ = number of transmitter, receiver

Estimate refined calibration matrix $T^m$ by

$$T^m = \frac{1}{N_r \cdot N_t} \cdot T^{m-1} \cdot \Lambda\left(T^{m-1}\right) \cdot T^{m-1}$$

38  m=m+1

36 Further iteration?  yes

no

37 Use calibration data $T^m$

## Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2318010 A

- WO 2007056672 A2

**Non-patent literature cited in the description**

- **SHERIF S. AHMED et al.** A Novel Fully Electronic Active Real-Time Imager Based on a Planar Multistatic Sparse Array. *IEEE Transactions on Microwave Theory and Techniques,* December 2011, vol. 59 (12), 3567-3576